# EUROPEAN PATENT SPECIFICATION

(11) **EP 4 296 497 B1**
(45) Date of publication and mention of the grant of the patent: **12.11.2025**
(21) Application number: 22425029.0
(22) Date of filing: 24.06.2022
(51) Int. Cl.: F02M 21/02, F02M 59/16, F02M 65/00, B63H 21/38, F02M 37/00, F02M 37/18, F02M 37/30, F02M 31/02

(54) **METHANOL FUEL SUPPLY SYSTEM FOR A MARINE INTERNAL COMBUSTION ENGINE**
METHANOLBRENNSTOFFZUFUHRSYSTEM FÜR EINEN SCHIFFSVERBRENNUNGSMOTOR
SYSTÈME D'ALIMENTATION EN MÉTHANOL POUR MOTEUR À COMBUSTION INTERNE MARIN

(43) Date of publication of application: 27.12.2023
(73) Proprietor: Alfa Laval Corporate AB, 221 00 Lund (SE)
(72) Inventor: Casartelli, Daniele, 20900 MONZA (IT); Spazzadeschi, Nicoletta, 20900 MONZA (IT)
(74) Representative: Alfa Laval Attorneys

(56) References cited:
- CN-A- 114 320 686
- CN-B- 114 320 688
- CN-U- 216 429 806

## Description

### Field of the invention

The present invention refers in general to a fuel supply system for an internal combustion engine and, more specifically, to a fuel supply system wherein the fuel is methanol and the internal combustion engine is a marine internal combustion engine.

### Background of the invention

Large ships are typically driven by marine engines operating on fuels like Heavy Fuel Oil (HFO) or Diesel Oil (DO). These fuels are all carbon-based fossil fuels which emit high amounts of carbon dioxide when combusted. Therefore, one of the ambitions of the International Maritime Organization (IMO) is that the shipping industry should reduce carbon dioxide emissions by 40% by 2030 and by 70% by 2050.

An alternative fuel for marine engines is methanol, also known as methyl alcohol, a chemical with the formula CH₃OH (often abbreviated as MeOH). Existing marine engines operating on fossil fuel can typically be modified relatively easily so as to instead/additionally be operable on methanol and/or fuels containing methanol. Methanol has the advantage of being less polluting than carbon-based fossil marine fuels. However, methanol also has the disadvantage of being toxic, and therefore procedures must be in place for its neutralization when used as a fuel for marine engines.

Methanol fuel supply systems for marine combustion engines are known in the state of the art. However, these systems are usually complex, thus requiring sometimes oversized, complicated and expensive components. An example of a known fuel supply system is disclosed by CN114320688A.

### Summary of the invention

One object of the present invention is therefore to provide a methanol fuel supply system for a marine combustion engine which is capable of resolving the drawbacks of the prior art in a simple, inexpensive and particularly functional manner.

In detail, one object of the present invention is to provide a methanol fuel supply system for a marine combustion engine which is compact, easy to install and easy to operate if compared with the fuel supply systems according to the prior art.

Another object of the present invention is to provide a methanol fuel supply system for a marine combustion engine which does not require numerous and complex components in order to operate correctly.

A further object of the present invention is to provide a methanol fuel supply system for a marine combustion engine which is safe and risk-free for operators.

These objects are achieved according to the present invention by providing a methanol fuel supply system for a marine combustion engine as set forth in the attached claims.

Further features of the invention are underlined by the dependent claims, which are an integral part of the present description.

The methanol fuel supply system for a marine combustion engine according to the present invention is designed for supplying a methanol-based fuel from at least one fuel tank to at least one internal combustion engine and comprises at least one main fuel conduit, which fluidly connects the fuel tank to the internal combustion engine. At least one first fuel pump is placed along the main fuel conduit and is designed for sucking fuel from the fuel tank at a first pressure value and delivering the fuel along the main fuel conduit at a second pressure value, wherein the second pressure value is higher than the first pressure value. At least one second fuel pump is placed along the main fuel conduit, downstream of the first fuel pump, and is designed for receiving fuel from the first fuel pump at the second pressure value and delivering the fuel along the main fuel conduit at a third pressure value, wherein the third pressure value is higher than the second pressure value and wherein the third pressure value is equal to the operative pressure value of the fuel required by the internal combustion engine.

The methanol fuel supply system also comprises at least one first heat exchanger device, which is placed along the main fuel conduit and which is designed to exchange heat with the fuel to bring it to a temperature value within a predefined temperature range. This temperature range is equal to the operative temperature range of the fuel required by the internal combustion engine. The methanol fuel supply system further comprises at least one first fuel filtering unit, which is placed along the main fuel conduit, downstream of the second fuel pump, and which is designed for filtering the fuel before being supplied to the internal combustion engine at the third pressure value and within the predefined temperature range.

According to a preferred and advantageous aspect of the present invention, the methanol fuel supply system comprises at least one purging circuit, which is hydraulically connected to the main fuel conduit and which comprises in turn at least one inerting agent source, which is designed to supply an inerting agent to the methanol fuel supply system, and at least one purging conduit, which connects the inerting agent source to the main fuel conduit.

Preferably, the inerting agent is nitrogen.

Also, a first fuel recirculation conduit can be connected to the main fuel conduit, downstream of the first fuel pump and upstream of the second fuel pump. The first fuel recirculation conduit connects back the main fuel conduit to the fuel tank. A second fuel recirculation conduit is also connected to the main fuel conduit downstream of the second fuel pump and preferably upstream of the first fuel filtering unit. The second fuel recirculation conduit is designed to return, upstream of the second fuel pump, the fuel pumped by said second fuel pump.

According to a preferred aspect of the present invention, at least one pressure control device is placed along the first fuel recirculation conduit and/or the second fuel recirculation conduit. More preferably, the type of the pressure control devices is chosen from:
- a mechanical valve;
- a variable frequency drive placed on the first fuel pump and/or the second fuel pump.

According to another preferred and advantageous aspect of the present invention, the first heat exchanger device is provided with a fuel heat control equipment for adjusting the temperature of the fuel flowing through the main fuel conduit at the first heat exchanger device. The fuel heat control equipment comprises at least one container, for containing at least one heat exchanger medium, at least one loop conduit, for connecting in closed circuit the container to the first heat exchanger device, at least one second heat exchanger device, which is placed along the loop conduit, and at least one heat exchanger medium pump, for pumping the heat exchanger medium within the loop conduit and into the second heat exchanger device.

Preferably, the heat exchanger medium is a glycol-water solution.

Also preferably, the methanol fuel supply system comprises at least one second fuel filtering unit, which is placed along the main fuel conduit downstream of the fuel tank and upstream of the first fuel pump. At least one connection conduit, provided with a differential pressure indicator, can be connected to the main fuel conduit downstream and upstream of the second fuel filtering unit.

Preferably, the first fuel filtering unit comprises a plurality of filter elements, as well as a plurality of filter valves making it possible to have a continuous filtration of the fuel through the first fuel filtering unit also during maintenance of one or more of the filter elements.

Also preferably, the main fuel conduit comprises a plurality of fuel control and/or monitoring devices for acquiring data related to the fuel supplied from the fuel tank to the internal combustion engine and/or for sending these data to a central processing unit. Always preferably, the type of the fuel control and/or monitoring devices is chosen from:
- a fuel pressure value sensor and transmitter;
- a fuel temperature value sensor and transmitter;
- a fuel flow rate sensor and transmitter.

A single skid-mounted assembly, provided with a single frame, can be conveniently arranged to support all the components of the methanol fuel supply system.

### Brief description of the drawings

The features and advantages of a methanol fuel supply system for a marine combustion engine according to the present invention will be clearer from the following exemplifying and non-limiting description, with reference to the enclosed schematic drawings, in which:
Figure 1 is a schematic view showing the main components of the methanol fuel supply system for a marine combustion engine according to the present invention; and
Figure 2 is another schematic view of the fuel supply system of figure 1, wherein further components of the system are shown.

### Detailed description of the invention

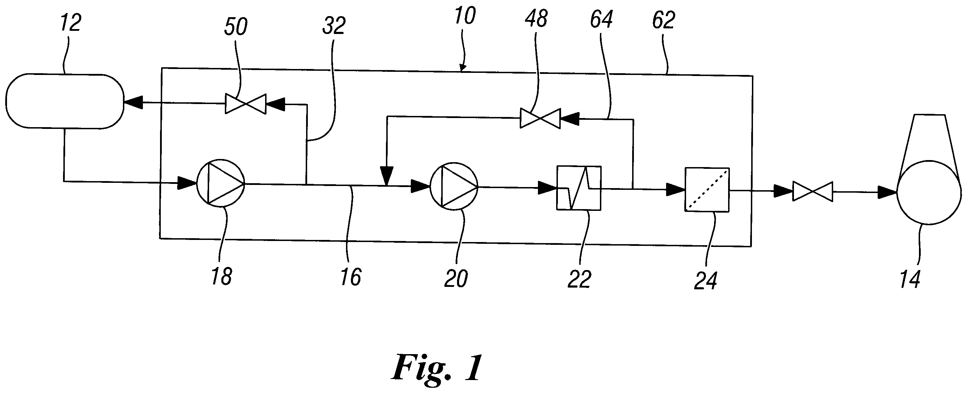

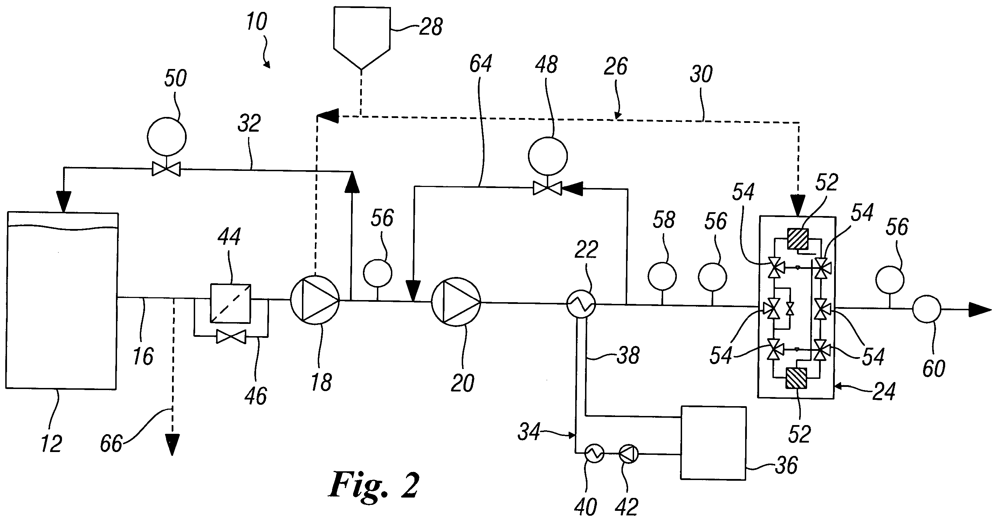

With reference to Figures 1 and 2, a preferred embodiment of a methanol fuel supply system for a marine combustion engine according to the present invention is shown. The fuel supply system is indicated as a whole with reference numeral 10. The fuel supply system 10 is designed for supplying a methanol-based fuel from at least one fuel tank 12 to at least one internal combustion engine 14, more precisely a marine internal combustion engine.

The fuel supply system 10 comprises at least one main fuel conduit 16, which fluidly connects the methanol-based fuel tank 12 to the marine internal combustion engine 14. At least one first fuel pump 18 is placed along the main fuel conduit 16. This first fuel pump 18 is designed for sucking the methanol-based fuel from the fuel tank 12 at a first pressure value P1 and delivering the methanol-based fuel along the main fuel conduit 16 at a second pressure value P2. The second pressure value P2 is higher than the first pressure value P1.

The first fuel pump 18 thus operates as a supply pump for the methanol-based fuel, which is contained in the fuel tank 12 at a first pressure value P1. This first pressure value P1 can preferably range from atmospheric pressure to 0.5 barG. This first fuel pump 18, which is preferably equipped with an electric motor and which can be for example of centrifugal type (although different pumping technologies are suitable as well), is thus capable of increasing the first pressure value P1 of the methanol-based fuel up to a second pressure value P2. This second pressure value P2 can be comprised, for example, between 6 barG and 8 barG. However, different pressure can also apply depending on the operating conditions of the marine internal combustion engine 14.

The fuel supply system 10 also comprises at least one second fuel pump 20, which is placed along the main fuel conduit 16 downstream of the first fuel pump 18. This second fuel pump 20 is designed for receiving the methanol-based fuel from the first fuel pump 18 at the second pressure value P2 and delivering the methanol-based fuel along the main fuel conduit 16 at a third pressure value P3. The third pressure value P3 is higher than the second pressure value P2 and is equal to the operative pressure value of the methanol-based fuel required by the marine internal combustion engine 14.

The first fuel pump 18 and the second fuel pump 20 thus form a two-stage (low-pressure stage and high-pressure stage) pumping system. The second fuel pump 20, which is preferably equipped with an electric motor and which can be for example of centrifugal type (although different pumping technologies are suitable as well), then operates as a high-pressure pump for the methanol-based fuel and is capable of feeding the marine internal combustion engine 14 with the methanol-based fuel at a third pressure value P3 of about 13 barG (pressure at skid battery limit) at any required flow rate inside the duty data range.

The fuel supply system 10 further comprises at least one first heat exchanger device 22, which is placed along the main fuel conduit 16, preferably but not exclusively downstream of the second fuel pump 20. The first heat exchanger device 22 is designed to exchange heat with the methanol-based fuel to bring the latter to a temperature value within a predefined temperature range ΔT. This temperature range ΔT is equal to the operative temperature range of the methanol-based fuel required by the marine internal combustion engine 14. In other words, before the injection into the marine internal combustion engine 14, the temperature T of the methanol-based fuel has to reach the correct value required at skid battery limit.

Preferably but not exclusively, depending on the operating conditions of the marine internal combustion engine 14, the temperature range ΔT varies between 25°C and 50°C, whereas the temperature T of the methanol-based fuel contained in the fuel tank 12 can vary between -20°C and 45°C. The first heat exchanger device 22 can be, for example, a shell-and-tube heat exchanger or a semi-welded gasketed plate type heat exchanger (although different heat exchange technologies are suitable as well).

At least one first fuel filtering unit 24 is placed along the main fuel conduit 16 downstream of the second fuel pump 20, preferably downstream of the first heat exchanger device 22. The first fuel filtering unit 24 is designed for filtering the methanol-based fuel before being supplied to the marine internal combustion engine 14 at the third pressure value P3 and within the predefined temperature range ΔT. More specifically, the first fuel filtering unit 24 allows to remove every particle present in the methanol-based fuel that could cause engine damage.

Preferably, as shown in Figure 2, the first fuel filtering unit 24 comprises a plurality of filter elements 52, as well as a plurality of filter valves 54. The filter valves 54 make it possible to have a continuous filtration of the methanol-based fuel through the first fuel filtering unit 24 also during maintenance of one or more of the filter elements 52. Filter elements 52 can be of a type capable of ensuring high efficiency of the first fuel filtering unit 24 and minimum maintenance requirement. Preferably, filtration degree of the first fuel filtering unit 24 can be of at least 10 microns.

Advantageously, the fuel supply system 10 according to the present invention can comprise at least one purging circuit 26, which is hydraulically connected to the main fuel conduit 16 and which comprises in turn at least one inerting agent source 28, which is designed to supply an inerting agent to the fuel supply system 10. For example, the inerting agent source 28 can be the inerting agent grid of the ship on which the fuel supply system 10 is installed. This inerting agent grid can thus be hydraulically connected to the main fuel conduit 16. Alternatively, the inerting agent source 28 can comprise one or more dedicated vessels, each containing a predefined amount of an inerting agent. The purging circuit 26 also comprises at least one purging conduit 30, which connects the inerting agent source 28 to the main fuel conduit 16. Preferably, the inerting agent is nitrogen.

Actually, since methanol is an inflammable and toxic liquid, a dangerously high vapor concentration can be reached in the main fuel conduit 16 in case of leakage, thus creating a dangerous condition. This may lead to an explosion if all the following conditions are met:
- the temperature T of the methanol-based fuel is above the flash point;
- a certain concentration of oxygen is present in the methanol-based fuel;
- the ratio of fuel vapour/oxygen is within a certain range;
- there is an ignition source with a sufficiently high temperature and energy.

Therefore, the function of the purging circuit 26 can be that of leak testing after maintenance of the fuel supply system 10, as well as that of reducing the oxygen content in said fuel supply system 10 before filling it with the methanol-based fuel. The likelihood of a flammable atmosphere being created in the fuel supply system 10 is thus reduced. Eventually a critical concentration is reached below which no ignition is possible. The purging circuit 26 may avoid this drawback by creating a non-flammable atmosphere inside the main fuel conduit 16 and inside any other piping connected to said main fuel conduit 16. Inerting is usually performed at startup of the fuel supply system 10, to remove air (and oxygen) from piping. Before maintenance operations on the fuel supply system 10, to push the methanol-based fuel back to the fuel tank 12 through one or more drain lines 66, avoiding contact with air and also with operating personnel, a purging operation can also be performed. The purging circuit 26 may be provided with one or more nitrogen inlets with filter, one or more pressure indicators and transmitters, one or more drain valves and one or more drain pumps (not shown in the drawings).

Preferably, as shown in the Figures, a first fuel recirculation conduit 32 can be connected to the main fuel conduit 16 downstream of the first fuel pump 18 and upstream of the second fuel pump 20. The first fuel recirculation conduit 32 connects back the main fuel conduit 16 to the fuel tank 12. A second fuel recirculation conduit 64 can also be connected to the main fuel conduit 16 downstream of the second fuel pump 20 and preferably upstream of the first fuel filtering unit 24. The second fuel recirculation conduit 64 is designed to return, upstream of the second fuel pump 20, the fuel pumped by said second fuel pump 20.

Additionally, at least one pressure control device 48, 50 can be placed along the first fuel recirculation conduit 32 and/or the second fuel recirculation conduit 64. For example, each pressure control device 48, 50 can be a mechanical valve or a variable frequency drive (VFD) placed on the first fuel pump 18 and/or the second fuel pump 20. One of the possible functions of each recirculation conduit 32, 64, together with the respective pressure control device 48, 50, is that of regulating the pressure of the methanol-based fuel at the outlet of the first fuel pump 18 and the second fuel pump 20. Another possible functions of each recirculation conduit 32, 64 is that of preventing the methanol-based fuel to reach the internal combustion engine 14 in certain operating conditions of said engine 14, while keeping the fuel supply system 10 ready to operate. For example, one of these operating conditions may be when the internal combustion engine 14 is running on a fuel other than the methanol-based fuel (e.g., a carbon-based fossil fuel), while the methanol-based fuel must be ready to be supplied to the internal combustion engine 14.

According to a preferred aspect of the invention, as shown in Figure 2, the first heat exchanger device 22 can be provided with a fuel heat control equipment 34 for adjusting the temperature T of the methanol-based fuel flowing through the main fuel conduit 16 at said first heat exchanger device 22. The fuel heat control equipment 34 comprises at least one container 36, for containing at least one heat exchanger medium, and at least one loop conduit 38, for connecting in closed circuit the container 36 to the first heat exchanger device 22. At least one second heat exchanger device 40 is placed along the loop conduit 38. At least one heat exchanger medium pump 42 is also placed along the loop conduit 38. The function of this pump 42, which can be conveniently equipped with its own electric motor, is that of pumping the heat exchanger medium within the loop conduit 38 and into the second heat exchanger device 40.

Preferably, the heat exchanger medium contained in the container 36 is a glycol-water solution. However, in addition to or in place of the glycol-water solution, other heat exchanger media could also be used, for example steam. The container 36 therefore has the function of buffer and expansion tank of the heat exchanger medium. The second heat exchanger device 40 can be for example of the brazed plate type (although different heat exchange technologies are suitable as well).

As shown in Figure 2, the fuel supply system 10 can be provided with at least one second fuel filtering unit 44, which is placed along the main fuel conduit 16 downstream of the fuel tank 12 and upstream of the first fuel pump 18. At least one connection conduit 46 with a differential pressure indicator can be provided. This connection conduit 46 is connected to the main fuel conduit 16 downstream and upstream of the second fuel filtering unit 44 for checking any variation of the differential pressure of the methanol-based fuel before and after the passage through the second fuel filtering unit 44.

The main fuel conduit 16 can be equipped with a plurality of fuel control and/or monitoring devices 56, 58, 60. These control and/or monitoring devices 56, 58, 60 are suitably designed for acquiring various data related to the methanol-based fuel supplied from the fuel tank 12 to the internal combustion engine 14. At least some of these control and/or monitoring devices 56, 58, 60 can also be designed for sending these data to a central processing unit (not shown in the drawings) of the fuel supply system 10. For example, the fuel control and/or monitoring devices 56, 58, 60 can comprise one or more fuel pressure value sensors and transmitters 56, one or more fuel temperature value sensors and transmitters 58 and one or more fuel flow rate sensors and transmitters 60.

The fuel supply system 10 described so far can be provided in the form of a single skid-mounted assembly. This assembly is conveniently provided with a single frame 62 which supports all the components of the fuel supply system 10.

The frame 62 can be designed to be as compact as possible and can be readily connected to any existing fuel tank 12 and any marine internal combustion engine 14 that can operate with a methanol-based fuel. This way it is possible to provide for easy installation of the fuel supply system 10 in any environment, for example inside a fuel preparation room of a ship.

It is thus seen that the methanol fuel supply system for a marine combustion engine according to the present invention achieve the previously outlined objects, resulting in a compact system, easy to install and easy to operate.

The methanol fuel supply system for a marine combustion engine of the present invention thus conceived is susceptible in any case of numerous modifications as defined by the enclosed claims.

### List of references

10: fuel supply system;
12: fuel tank;
14: internal combustion engine;
16: main fuel conduit;
18: first fuel pump;
20: second fuel pump;
22: first heat exchanger device;
24: first fuel filtering unit;
26: purging circuit;
28: inerting agent source;
30: purging conduit;
32: first fuel recirculation conduit;
34: fuel heat control equipment;
36: heat exchanger medium container;
38: loop conduit;
40: second heat exchanger device;
42: heat exchanger medium pump;
44: second fuel filtering unit;
46: bypass conduit;
48: pressure control device;
50: pressure control device;
52: filter elements;
54: filter valves;
56: fuel pressure value sensor and transmitter;
58: a fuel temperature value sensor and transmitter;
60: a fuel flow rate sensor and transmitter;
62: skid-mounted assembly;
64: second fuel recirculation conduit;
66: drain line;
P1: first fuel pressure value;
P2: second fuel pressure value;
P3: third fuel pressure value;
T: fuel temperature value;
ΔT: fuel temperature range.

## Claims

1. A fuel supply system (10) for supplying a methanol-based fuel from at least one fuel tank (12) to at least one internal combustion engine (14), the fuel supply system (10) comprising:
- at least one main fuel conduit (16), which fluidly connects said fuel tank (12) to said internal combustion engine (14);
- at least one first fuel pump (18), which is placed along said main fuel conduit (16) and which is designed for sucking fuel from said fuel tank (12) at a first pressure value (P1) and delivering said fuel along said main fuel conduit (16) at a second pressure value (P2), wherein said second pressure value (P2) is higher than said first pressure value (P1);
- at least one second fuel pump (20), which is placed along said main fuel conduit (16) downstream of said first fuel pump (18) and which is designed for receiving fuel from said first fuel pump (18) at said second pressure value (P2) and delivering said fuel along said main fuel conduit (16) at a third pressure value (P3), wherein said third pressure value (P3) is higher than said second pressure value (P2) and wherein said third pressure value (P3) is equal to the operative pressure value of said fuel required by said internal combustion engine (14);
- at least one first heat exchanger device (22), which is placed along said main fuel conduit (16) and which is designed to exchange heat with said fuel to bring said fuel to a temperature value within a predefined temperature range (ΔT), wherein said temperature range (ΔT) is equal to the operative temperature range of said fuel required by said internal combustion engine (14); and
- at least one first fuel filtering unit (24), which is placed along said main fuel conduit (16) downstream of said second fuel pump (20) and which is designed for filtering said fuel before being supplied to said internal combustion engine (14) at said third pressure value (P3) and within said predefined temperature range (ΔT), the system further comprising:
- a first fuel recirculation conduit (32), which is connected to said main fuel conduit (16) downstream of said first fuel pump (18) and upstream of said second fuel pump (20), and
- a second fuel recirculation conduit (64), which is connected to said main fuel conduit (16) downstream of said second fuel pump (20) and preferably upstream of said first fuel filtering unit (24), said second fuel recirculation conduit (64) being designed to return, upstream of said second fuel pump (20), the fuel pumped by said second fuel pump (20),
**characterized in that** said first fuel recirculation conduit (32) connects back said main fuel conduit (16) to said fuel tank (12).

2. The system (10) according to claim 1, **characterized in that** it comprises at least one purging circuit (26) which is hydraulically connected to said main fuel conduit (16) and which comprises in turn:
- at least one inerting agent source (28), which is designed to supply an inerting agent to said system (10); and
- at least one purging conduit (30), which connects said inerting agent source (28) to said main fuel conduit (16).

3. The system (10) according to claim 2, **characterized in that** said inerting agent is nitrogen.

4. The system (10) according to anyone of the preceding claims, **characterized in that** at least one pressure control device (48; 50) is placed along said first fuel recirculation conduit (32) and/or said second fuel recirculation conduit (64).

5. The system (10) according to claim 4, **characterized in that** the type of said pressure control device (48; 50) is chosen from:
- a mechanical valve;
- a variable frequency drive placed on said first fuel pump (18) and/or said second fuel pump (20).

6. The system (10) according to anyone of claims 1 to 5, **characterized in that** said first heat exchanger device (22) is provided with a fuel heat control equipment (34) for adjusting the temperature (T) of said fuel flowing through said main fuel conduit (16) at said first heat exchanger device (22), said fuel heat control equipment (34) comprising:
- at least one container (36) for containing at least one heat exchanger medium;
- at least one loop conduit (38) for connecting in closed circuit said container (36) to said first heat exchanger device (22);
- at least one second heat exchanger device (40), which is placed along said loop conduit (38); and
- at least one heat exchanger medium pump (42) for pumping said heat exchanger medium within said loop conduit (38) and into said second heat exchanger device (40).

7. The system (10) according to claim 6, **characterized in that** said heat exchanger medium is a glycol-water solution.

8. The system (10) according to anyone of claims 1 to 7,
**characterized in that** it comprises at least one second fuel filtering unit (44), which is placed along said main fuel conduit (16) downstream of said fuel tank (12) and upstream of said first fuel pump (18).

9. The system (10) according to claim 8, **characterized in that** at least one connection conduit (46) provided with a differential pressure indicator is connected to said main fuel conduit (16) downstream and upstream of said second fuel filtering unit (44).

10. The system (10) according to anyone of claims 1 to 9, **characterized in that** said first fuel filtering unit (24) comprises a plurality of filter elements (52), as well as a plurality of filter valves (54) making it possible to have a continuous filtration of said fuel through said first fuel filtering unit (24) also during maintenance of one or more of said filter elements (52).

11. The system (10) according to anyone of claims 1 to 10, **characterized in that** said main fuel conduit (16) comprises a plurality of fuel control and/or monitoring devices (56; 58; 60) for acquiring data related to the fuel supplied from said fuel tank (12) to said internal combustion engine (14) and/or for sending said data to a central processing unit.

12. The system (10) according to claim 11, **characterized in that** the type of said fuel control and/or monitoring devices (56; 58; 60) is chosen from:
- a fuel pressure value sensor and transmitter (56);
- a fuel temperature value sensor and transmitter (58);
- a fuel flow rate sensor and transmitter (60).

13. The system (10) according to anyone of claims 1 to 12, **characterized in that** a single skid-mounted assembly provided with a single frame (62) is arranged to support all the components of said system (10).

## Patentansprüche

1. Brennstoffzufuhrsystem (10) zum Zuführen eines Brennstoffs auf Methanolbasis aus mindestens einem Brennstofftank (12) zu mindestens einem Verbrennungsmotor (14), wobei das Brennstoffzufuhrsystem (10) umfasst:
- mindestens eine Hauptbrennstoffleitung (16), die den Brennstofftank (12) mit dem Verbrennungsmotor (14) fluidisch verbindet;
- mindestens eine erste Brennstoffpumpe (18), die entlang der Hauptbrennstoffleitung (16) angeordnet ist und dazu ausgelegt ist, Brennstoff aus dem Brennstofftank (12) mit einem ersten Druckwert (P1) anzusaugen und den Brennstoff entlang der Brennstoffhauptleitung (16) mit einem zweiten Druckwert (P2) zu fördern, wobei der zweite Druckwert (P2) höher ist als der erste Druckwert (P1);
- mindestens eine zweite Brennstoffpumpe (20), die entlang der Hauptbrennstoffleitung (16) stromabwärts von der ersten Brennstoffpumpe (18) angeordnet ist und dazu ausgelegt ist, Brennstoff von der ersten Brennstoffpumpe (18) mit dem zweiten Druckwert (P2) aufzunehmen und den Brennstoff entlang der Hauptbrennstoffleitung (16) mit einem dritten Druckwert (P3) zu fördern, wobei der dritte Druckwert (P3) höher ist als der zweite Druckwert (P2) und wobei der dritte Druckwert (P3) gleich dem Betriebsdruckwert des Brennstoffs ist, der von dem Verbrennungsmotor (14) benötigt wird;
- mindestens eine erste Wärmetauschervorrichtung (22), die entlang der Hauptbrennstoffleitung (16) angeordnet ist und dazu ausgelegt ist, Wärme mit dem Brennstoff auszutauschen, um den Brennstoff auf einen Temperaturwert innerhalb eines vordefinierten Temperaturbereichs (ΔT) zu bringen, wobei der Temperaturbereich (ΔT) gleich dem von dem Verbrennungsmotor (14) benötigten Betriebstemperaturbereich des Brennstoffs ist; und
- mindestens eine erste Brennstofffiltereinheit (24), die entlang der Hauptbrennstoffleitung (16) stromabwärts der zweiten Brennstoffpumpe (20) angeordnet ist und dazu ausgelegt ist, den Brennstoff zu filtern, bevor er dem Verbrennungsmotor (14) bei dem dritten Druckwert (P3) und innerhalb des vordefinierten Temperaturbereichs (ΔT) zugeführt wird,
wobei das System ferner umfasst:
- eine erste Brennstoffrückführleitung (32), die mit der Hauptbrennstoffleitung (16) stromabwärts der ersten Brennstoffpumpe (18) und stromaufwärts der zweiten Brennstoffpumpe (20) verbunden ist, und
- eine zweite Brennstoffrückführleitung (64), die mit der Hauptbrennstoffleitung (16) stromabwärts der zweiten Brennstoffpumpe (20) und vorzugsweise stromaufwärts der ersten Brennstofffiltereinheit (24) verbunden ist, wobei die zweite Brennstoffrückführleitung (64) dazu ausgelegt ist, den von der zweiten Brennstoffpumpe (20) gepumpten Brennstoff stromaufwärts der zweiten Brennstoffpumpe (20) zurückzuführen,
**dadurch gekennzeichnet, dass** die erste Brennstoffrückführleitung (32) die Hauptbrennstoffleitung (16) wieder mit dem Brennstofftank (12) verbindet.

2. System (10) nach Anspruch 1, **dadurch gekennzeichnet, dass** es mindestens einen Spülkreislauf (26) umfasst, der hydraulisch mit der Hauptbrennstoffleitung (16) verbunden ist und seinerseits umfasst:
- mindestens eine Inertisierungsmittelquelle (28), die dazu ausgelegt ist, ein Inertisierungsmittel an das System (10) zuzuführen; und
- mindestens eine Spülleitung (30), die die Inertisierungsmittelquelle (28) mit der Hauptbrennstoffleitung (16) verbindet.

3. System (10) nach Anspruch 2, **dadurch gekennzeichnet, dass** das Inertisierungsmittel Stickstoff ist.

4. System (10) nach einem der vorstehenden Ansprüche, **dadurch gekennzeichnet, dass** mindestens eine Druckregelvorrichtung (48; 50) entlang der ersten Brennstoffrückführleitung (32) und/oder der zweiten Brennstoffrückführleitung (64) angeordnet ist.

5. System (10) nach Anspruch 4, **dadurch gekennzeichnet, dass** die Art der Druckregelvorrichtung (48; 50) ausgewählt ist aus:
- einem mechanischen Ventil;
- einem Frequenzumrichter, der an der ersten Brennstoffpumpe (18) und/oder an der zweiten Brennstoffpumpe (20) angeordnet ist.

6. System (10) nach einem der Ansprüche 1 bis 5, **dadurch gekennzeichnet, dass** die erste Wärmetauschervorrichtung (22) mit einer Brennstoffwärmesteuereinrichtung (34) bereitgestellt ist, um die Temperatur (T) des durch die Hauptbrennstoffleitung (16) an der ersten Wärmetauschervorrichtung (22) strömenden Brennstoffs einzustellen, wobei die Brennstoffwärmesteuereinrichtung (34) umfasst:
- mindestens einen Behälter (36) zur Aufnahme mindestens eines Wärmetauschmediums;
- mindestens eine Schleifenleitung (38) zum Verbinden des Behälters (36) in einem geschlossenen Kreislauf mit der ersten Wärmetauschervorrichtung (22);
- mindestens eine zweite Wärmetauschervorrichtung (40), die entlang der Schleifenleitung (38) angeordnet ist; und
- mindestens eine Wärmetauschmedium-Pumpe (42) zum Pumpen des Wärmetauschmediums innerhalb der Schleifenleitung (38) und in die zweite Wärmetauschervorrichtung (40).

7. System (10) nach Anspruch 6, **dadurch gekennzeichnet, dass** das Wärmetauschmedium eine Glykol-Wasser-Lösung ist.

8. System (10) nach einem der Ansprüche 1 bis 7, **dadurch gekennzeichnet, dass** es mindestens eine zweite Brennstofffiltereinheit (44) umfasst, die entlang der Hauptbrennstoffleitung (16) stromabwärts des Brennstofftanks (12) und stromaufwärts der ersten Brennstoffpumpe (18) angeordnet ist.

9. System (10) nach Anspruch 8, **dadurch gekennzeichnet, dass** mindestens eine Verbindungsleitung (46) mit einem Differenzdruckanzeiger mit der Hauptbrennstoffleitung (16) stromabwärts und stromaufwärts der zweiten Brennstofffiltereinheit (44) verbunden ist.

10. System (10) nach einem der Ansprüche 1 bis 9, **dadurch gekennzeichnet, dass** die erste Brennstofffiltereinheit (24) eine Vielzahl von Filterelementen (52) sowie eine Vielzahl von Filterventilen (54) umfasst, die eine kontinuierliche Filtration des Brennstoffs durch die erste Brennstofffiltereinheit (24) auch während der Wartung eines oder mehrerer Filterelemente (52) ermöglicht.

11. System (10) nach einem der Ansprüche 1 bis 10, **dadurch gekennzeichnet, dass** die Hauptbrennstoffleitung (16) eine Vielzahl von Brennstoffsteuer- und/oder Überwachungsvorrichtungen (56; 58; 60) umfasst, zum Erfassen von Daten, die sich auf den von dem Brennstofftank (12) zu dem Verbrennungsmotor (14) gelieferten Brennstoff beziehen, und/oder zum Senden der Daten an eine zentrale Verarbeitungseinheit.

12. System (10) nach Anspruch 11, **dadurch gekennzeichnet, dass** die Art der Brennstoffsteuer- und/oder -Überwachungsvorrichtungen (56; 58; 60) ausgewählt ist aus:
- einem Brennstoffdrucksensor und -geber (56);
- einem Brennstofftemperatursensor und -geber (58);
- einem Brennstoffdurchflusssensor und -geber (60).

13. System (10) nach einem der Ansprüche 1 bis 12, **dadurch gekennzeichnet, dass** eine einzige, vormontierte Baugruppe mit einem einzigen Rahmen (62) angeordnet ist, um alle Komponenten des Systems (10) zu tragen.

## Revendications

1. Système (10) de fourniture en carburant pour fournir un carburant à base de méthanol depuis au moins un réservoir de carburant (12) à au moins un moteur à combustion interne (14), le système (10) de fourniture en carburant comprenant :
- au moins une durite principale de carburant (16), qui raccorde fluidiquement ledit réservoir de carburant (12) audit moteur à combustion interne (14) ;
- au moins une première pompe à carburant (18), qui est placée le long de ladite durite principale de carburant (16) et qui est conçue pour aspirer du carburant depuis ledit réservoir de carburant (12) à une première valeur de pression (P1) et pour délivrer ledit carburant le long de ladite durite principale de carburant (16) à une seconde valeur de pression (P2), dans lequel ladite seconde valeur de pression (P2) est supérieure à ladite première valeur de pression (P1) ;
- au moins une seconde pompe à carburant (20), qui est placée le long de ladite durite principale de carburant (16) en aval de ladite première pompe à carburant (18) et qui est conçue pour recevoir du carburant depuis ladite première pompe à carburant (18) à ladite seconde valeur de pression (P2) et pour délivrer ledit carburant le long de ladite durite principale de carburant (16) à une troisième valeur de pression (P3), dans lequel ladite troisième valeur de pression (P3) est supérieure à ladite seconde valeur de pression (P2) et dans lequel ladite troisième valeur de pression (P3) est égale à la valeur de pression opérationnelle dudit carburant requise par ledit moteur à combustion interne (14) ;
- au moins un premier dispositif d'échange de chaleur (22), qui est placé le long de ladite durite principale de carburant (16) et qui est conçu pour échanger de la chaleur avec ledit carburant pour porter ledit carburant à une valeur de température à l'intérieur d'une plage de températures (ΔT) prédéfinie, dans lequel ladite plage de températures (ΔT) est égale à la plage de températures opérationnelles dudit carburant requise par ledit moteur à combustion interne (14) ; et
- au moins une première unité de filtration de carburant (24), qui est placée le long de ladite durite principale de carburant (16) en aval de ladite seconde pompe à carburant (20) et qui est conçue pour filtrer ledit carburant avant qu'il soit fourni audit moteur à combustion interne (14) à ladite troisième valeur de pression (P3) et à l'intérieur de ladite plage de températures (ΔT) prédéfinie,
le système comprenant en outre :
- une première durite de recirculation de carburant (32), qui est raccordée à ladite durite principale de carburant (16) en aval de ladite première pompe à carburant (18) et en amont de ladite seconde pompe à carburant (20), et
- une seconde durite de recirculation de carburant (64), qui est raccordée à ladite durite principale de carburant (16) en aval de ladite seconde pompe à carburant (20) et préférablement en amont de ladite première unité de filtration de carburant (24), ladite seconde durite de recirculation de carburant (64) étant conçue pour renvoyer, en amont de ladite seconde pompe à carburant (20), le carburant pompé par ladite seconde pompe à carburant (20),
**caractérisé en ce que** ladite première durite de recirculation de carburant (32) raccorde en retour ladite durite principale de carburant (16) audit réservoir de carburant (12).

2. Système (10) selon la revendication 1, **caractérisé en ce qu'**il comprend au moins un circuit de purge (26) qui est hydrauliquement raccordé à ladite durite principale de carburant (16) et qui comprend à son tour :
- au moins une source d'agent d'inertie (28), qui est conçue pour fournir un agent d'inertie audit système (10) ; et
- au moins une durite de purge (30), qui raccorde ladite source d'agent d'inertie (28) à ladite durite principale de carburant (16).

3. Système (10) selon la revendication 2, **caractérisé en ce que** ledit agent d'inertie est l'azote.

4. Système (10) selon l'une quelconque des revendications précédentes, **caractérisé en ce qu'**au moins un dispositif de régulation de pression (48 ; 50) est placé le long de ladite première durite de recirculation de carburant (32) et/ou ladite seconde durite de recirculation de carburant (64).

5. Système (10) selon la revendication 4, **caractérisé en ce que** le type dudit dispositif de régulation de pression (48 ; 50) est choisi parmi :
- une valve mécanique ;
- un entraînement à fréquence variable placé sur ladite première pompe à carburant (18) et/ou sur ladite seconde pompe à carburant (20).

6. Système (10) selon l'une quelconque des revendications 1 à 5, **caractérisé en ce que** ledit premier dispositif d'échange de chaleur (22) est pourvu d'un équipement de régulation de chaleur de carburant (34) pour ajuster la température (T) dudit carburant s'écoulant à travers ladite durite principale de carburant (16) au niveau dudit premier dispositif d'échange de chaleur (22), ledit équipement de régulation de chaleur de carburant (34) comprenant :
- au moins un récipient (36) pour contenir au moins un milieu d'échange de chaleur ;
- au moins une durite en boucle (38) pour le raccordement en circuit fermé dudit récipient (36) audit premier dispositif d'échange de chaleur (22) ;
- au moins un second dispositif d'échange de chaleur (40), qui est placé le long de ladite durite en boucle (38) ; et
- au moins une pompe de milieu d'échange de chaleur (42) pour pomper ledit milieu d'échange de chaleur à l'intérieur de ladite durite en boucle (38) et dans ledit second dispositif d'échange de chaleur (40).

7. Système (10) selon la revendication 6, **caractérisé en ce que** ledit milieu d'échange de chaleur est une solution de glycol-eau.

8. Système (10) selon l'une quelconque des revendications 1 à 7, **caractérisé en ce qu'**il comprend au moins une seconde unité de filtration de carburant (44), qui est placée le long de ladite durite principale de carburant (16) en aval dudit réservoir de carburant (12) et en amont de ladite première pompe à carburant (18).

9. Système (10) selon la revendication 8, **caractérisé en ce qu'**au moins une durite de raccordement (46) prévue avec un indicateur de pression différentielle est raccordée à ladite durite principale de carburant (16) en aval et en amont de ladite seconde unité de filtration de carburant (44).

10. Système (10) selon l'une quelconque des revendications 1 à 9, **caractérisé en ce que** ladite première unité de filtration de carburant (24) comprend une pluralité d'éléments de filtration (52), ainsi qu'une pluralité de valves de filtration (54) permettant d'avoir une filtration continue dudit carburant à travers ladite première unité de filtration de carburant (24) également durant l'entretien d'un ou plusieurs desdits éléments de filtration (52).

11. Système (10) selon l'une quelconque des revendications 1 à 10, **caractérisé en ce que** ladite durite principale de carburant (16) comprend une pluralité de dispositifs de régulation et/ou de suivi du carburant (56 ; 58 ; 60) pour acquérir des données liées au carburant fourni depuis ledit réservoir de carburant (12) audit moteur à combustion interne (14) et/ou pour envoyer lesdites données à une unité de traitement centrale.

12. Système (10) selon la revendication 11, **caractérisé en ce que** le type desdits dispositifs de régulation et/ou de suivi du carburant (56 ; 58 ; 60) est choisi parmi :
- un capteur et un transmetteur (56) de valeur de pression de carburant ;
- un capteur et un transmetteur (58) de valeur de température de carburant ;
- un capteur et un transmetteur (60) de débit d'écoulement du carburant.

13. Système (10) selon l'une quelconque des revendications 1 à 12, **caractérisé en ce qu'**un ensemble unique antidérapage prévu avec un châssis unique (62) est agencé pour supporter tous les composants dudit système (10).
